# EUROPEAN PATENT SPECIFICATION

(11) **EP 1 052 321 B1**
(45) Date of publication and mention of the grant of the patent: **27.08.2008**
(21) Application number: 00304045.8
(22) Date of filing: 12.05.2000
(51) Int. Cl.: D04H 1/42, D04H 3/00, D04H 13/00, C25D 5/50, B01D 39/20, B23P 17/06

(54) **Metallic non woven fabric and method for manufacturing the same**
Vliesstoff aus Metallfasern und Verfahren zu dessen Herstellung
Tissu métallique non tissé et méthode pour sa fabrication

(30) Priority: 12.05.1999 JP 13131099
(43) Date of publication of application: 15.11.2000
(73) Proprietor: Sumitomo Electric Industries, Ltd., Osaka-shi, Osaka 541-0041 (JP)
(72) Inventor: Shimoda, Kohei, Itami-Shi, Hyogo (JP); Mizuno, Osamu, Itami-Shi, Hyogo (JP); Tsubouchi, Toshiyasu, Itami-Shi, Hyogo (JP)
(74) Representative: Cross, Rupert Edward Blount

(56) References cited:
- EP-A- 0 404 961
- EP-A- 0 686 718
- WO-A-96/03279
- US-A- 3 695 869
- US-A- 5 352 517
- US-A- 5 725 750

## Description

The present invention relates to a metallic nonwoven fabric widely used for a positive plate of secondary batteries, catalyst carriers, various filters such as exhaust gas filters and polymer filters, fuel-gasifying elements, a silencing element of car mufflers, and so on and to a method for manufacturing the metallic nonwoven fabric.

Metallic nonwoven fabrics composed of metal fibers have been widely used for positive plates of secondary batteries, catalyst carriers, various filters such as exhaust gas filters and polymer filters, fuel-gasifying elements, silencing elements of car mufflers, and so on. A reduction in metal fiber diameter reduces the size of the cells in the metallic nonwoven fabrics, enabling a reduction in size and weight and an enhancement of performance of positive plates of secondary batteries, catalyst carriers, various filters, and so on. Consequently, a reduction in diameter of the metal fiber has been a target of researchers and engineers. When a metallic nonwoven fabric is used for those applications, the metallic nonwoven fabric is required to allow nondefective brazing and crack-free bending in conformance with the shape of a product.

When a metal fiber is made of iron, however, a reduction in fiber diameter increases the surface activity. For instance, a metal fiber is oxidized at room temperature, easily producing diiron trioxide (Fe₂O₃). The result is the development of such problems as rusting, a reduction in brazing quality, and a deterioration in bending performance. These phenomena are especially notable in metallic nonwoven fabrics composed of fine metal fibers, made of iron, having a fiber diameter of 30 µm or less and readily pose problems.

A metallic nonwoven fabric made of iron is usually manufactured through the following steps: First, a carbon nonwoven fabric is plated with iron. Then, the carbon nonwoven fabric is removed. Finally, the remaining iron is sintered. The second and third steps are important to overcome the above-mentioned problems. A published Japanese patent application "*Tokukaihei* 10-1797" discloses the following manufacturing process:
(a) a plastic foam or organic fibers are plated with iron;
(b) the plastic foam or organic fibers are removed by heating at 600 to 700 °C;
(c) the iron structure is improved by heating at 700 to 900 °C; and
(d) the iron is annealed at 900 to 1,100 °C.

The steps (c) and (d) compose a two-step sintering process. In the above process, no information is given with regard to the atmospheric gas in the furnace.

Another published Japanese patent application *"Tokukaihei* 10-46268" discloses the following manufacturing process of a metallic porous body made of nickel-chrome alloy in place of the iron family:
(a) a plastic foam is removed by heating in a reducing gas atmosphere containing 2.5 to 30 vol. % steam or carbon dioxide at 700 to 900 °C; and
(b) metal powders containing nickel and chrome are sintered in a reducing gas atmosphere of a hydrogen gas or an ammonium-cracking gas at 1,100 to 1,300 °C.

As mentioned above, *"Tokukaihei* 10-46268" discloses the furnace's atmospheric gas and temperature condition in the plastic-foam-removing process and the furnace's atmospheric gas and temperature condition in the subsequent metal-powder-sintering process. The patent application describes that it is desirable that the foregoing processes be carried out separately without using a continuous furnace. This requires that each process be handled with a batch system independently. Therefore, it is desirable to improve this manufacturing method in terms of productivity and manufacturing costs.

As described earlier, when a metallic nonwoven fabric is composed of fine metal fibers of iron, surface oxidation of the metal fibers easily produce diiron trioxide (Fe₂O₃). An object of the present invention is to offer a metallic nonwoven fabric that:
(a) is free from rusting, a reduction in brazing quality, and a deterioration in bending performance all caused by the foregoing diiron trioxide (Fe₂O₃);
(b) has high productivity; and
(c) is low in manufacturing costs,
and to offer a method for manufacturing the metallic nonwoven fabric.

The present inventors studied at room temperature the mechanism of oxidation of a metallic nonwoven fabric made of fine iron fibers having a hollow cross section and intensely examined the oxidation and developing processes. The present inventors found that the above-described problems can be solved by forming in advance an iron oxide layer on the surface of the metal fibers. The iron oxide layer consists of iron monoxide (FeO), whose iron deficiency is x < 0.043 in Fe₁₋ₓO, and triiron tetroxide (Fe₃O₄), whose iron deficiency is 0.006 < x < 0.104 in Fe₃₋ₓO₄. The present invention was thus completed.

The present invention offers a metallic nonwoven fabric that:
(a) is made of iron;
(b) is composed of metal fibers that have a fiber diameter of 30 µm or less and that have a hollow cross section;
(c) has the foregoing iron oxide layer formed at least on the outer surface of the metal fibers; and
(d) has an oxygen content not less than 0.02 wt. % and not more than 0.8 wt. % in the metal fibers.

The iron oxide layer suppresses the oxidation of the metal fibers by suppressing the diffusion of oxygen into the metal fibers with its dense iron oxide layer, preventing the oxidation from proceeding. The result is improvement in brazing quality and bending performance. The diameter of the metal fibers can be determined by observation through a scanning electron microscope (SEM). The fiber may have a hollow square, round, or ellipse cross section.

The metallic nonwoven fabric is specified to have an oxygen content not less than 0.02 wt. % and not more than 0.8 wt. % in the metal fibers for the reason given below. If the oxygen content is less than 0.02 wt. %, a sufficiently dense iron oxide layer cannot be formed on the surface of the metal fibers. Consequently, a brazing alloy has excessive wettability with the metallic nonwoven fabric and penetrates deep inside, decreasing porosity, hardening the fabric, and deteriorating the bending performance. If the oxygen content is more than 0.8 wt. %, a brazing alloy cannot have sufficient wettability, possibly deteriorating the brazing quality. It is preferable that the oxygen content be not less than 0.02 wt. % and not more than 0.5 wt. %.

The metallic nonwoven fabric of the present invention is manufactured by:
(a) coating iron on the surface of the fibers composing a conductive carbon nonwoven fabric by electroplating; and
(b) removing the carbon nonwoven fabric and sintering the iron in a furnace filled with an atmospheric gas, containing a reducing gas, kept at not less than 930 °C and not more than 1,350 °C and at a dew point of water vapor not less than -40 °C and not more than 50 °C.

The conductive carbon nonwoven fabric may use either polyacrylonitrile (PAN)-type or pitch-type carbon fibers. The surface of the carbon fibers may be treated with the application of a sizing agent, a surface modifying agent, and a surface-active agent. An electrical conductive member such as a plated layer or a vapor-phase-coated layer may be formed on the surface of the carbon fibers. A pre-treatment for electroplating such as cleaning, heat treatment, electroless plating, and needle-punching processing may be performed. Iron electroplating may be carried out with a well-known method. There are no restrictions on the composition of a plating bath.

If the furnace filled with an atmospheric gas containing a reducing gas has a temperature lower than 930 °C, the conductive carbon nonwoven fabric cannot be removed completely. If higher than 1,350 °C, the metal fibers react with the water vapor rapidly, producing porous fine metal fibers having numerous defects, and causing the bending performance to deteriorate undesirably. The furnace temperature is specified to be not less than 930 °C and not more than 1,350 °C, desirably not less than 930 °C and not more than 1,150 °C, more desirably not less than 930 °C and not more than 1,050 °C. If a metallic nonwoven fabric is kept at such a high temperature for a prolonged time, the metal crystals grow and become coarse, reducing the mechanical strength. Therefore, it is desirable for the heat treatment to be done within three hours, more desirably within one hour.

If the furnace atmosphere has a dew point of water vapor lower than -40 °C, the metal fibers cannot have sufficient oxygen content, posing a problem that a dense iron oxide layer may possibly not form on the surface. Consequently, the furnace atmosphere is specified to have a dew point of water vapor not less than -40 °C, desirably not less than -20 °C, more desirably not less than 0 °C. If the furnace atmosphere has a dew point of water vapor higher than 50 °C, the metal fibers have excessive oxygen content, posing a problem that the brazing quality and bending performance deteriorate. Therefore, it is desirable that the furnace atmosphere has a dew point of water vapor not more than 50 °C, more desirably not more than 40 °C.

When a hydrogen gas is used as a reducing gas contained in the atmospheric gas for the furnace, the hydrogen gas exhibits its effects at a concentration of 2 vol. % or more. Nevertheless, it is desirable that the hydrogen gas concentration be 5 vol. % or more, preferably 10 vol. % or more. When a carbon monoxide gas is used, it is desirable that the concentration be 5 vol. % or more.

A reducing gas has an effect of preventing oxidation of metal fibers. Besides the foregoing hydrogen gas and carbon monoxide gas, an ammonium-cracking gas can be used as a reducing gas. An atmospheric gas may contain an inert gas such as a nitrogen gas and an argon gas concurrently with a reducing gas.

The above-described manufacturing method permits the two processes, the removing process of the carbon nonwoven fabric and the subsequent sintering process of the iron, to be treated with the same atmospheric gas, temperature range, and dew point of water vapor, enabling continuous processing and eliminating the need for two processes. In contrast, the manufacturing method disclosed in the foregoing *"Tokukaihei* 10-46268" carries out the two processes separately, the removing process of the plastic foam and the sintering process of the metal powders, with an independent batch system. Therefore, the manufacturing method of the present invention is more advantageous than the method of "Tokukaihei 10-46268" in terms of high productivity and low costs.

The present invention offers a metallic nonwoven fabric that is composed of fine metal fibers, made of iron, having a fiber diameter of 30 µm or less and that has an iron oxide layer formed on the surface of the metal fibers. Because the metal fibers have an oxygen content not less than 0.02 wt. % and not more than 0.8 wt. %, the formation of oxides is suppressed on the surface of the metal fibers. Thus, a metallic nonwoven fabric is completed that is superior in the required brazing quality and bending performances when a metallic nonwoven fabric is used for a positive plate in secondary batteries, various filters, and other applications. In addition, the metallic nonwoven fabric of the present invention allows removal of the carbon nonwoven fabric and sintering of the iron to be performed continuously in its manufacturing process, thereby enabling an increase in productivity and a reduction in costs.

A carbon nonwoven fabric was prepared that consists mainly of pitch-type carbon fibers having an average fiber diameter of 7.0 µm and an organic binder. The carbon nonwoven fabric was treated to obtain hydrophilicity and other qualities as a pre-treatment for electroplating. Then, the surface of the fibers of the carbon nonwoven fabric was iron-plated with a well-known electroplating method.

Subsequently, heat treatment for removing the carbon nonwoven fabric and for sintering the iron was carried out at a temperature not less than 880 °C and not more than 1,350 °C in a furnace filled with an atmospheric gas, containing a reducing ammonium-cracking gas, at a dew point of water vapor not less than -40 °C and not more than 50 °C. Ten different types of products were produced by changing the dew point of water vapor and the heat treatment temperature within the above-mentioned range.

The fiber diameters were measured by observation through an SEM. The average value was calculated by using the data of 30 metal fibers. The dew point of water vapor of the furnace atmosphere was measured with a dew point meter Type-35IS made by Japan Panametrics Co., Ltd. The presence or absence of an iron oxide layer was confirmed via analysis by X-ray photoelectron spectroscopy (XPS). The oxygen content was measured by an infrared spectroscopic analysis.

Then, an accelerated oxidation test was carried out by keeping the metallic nonwoven fabrics in an oven of a constant temperature of 25 °C, and a constant humidity of 50% for 24 hours to evaluate brazing quality and bending performance. The brazing quality was evaluated by the following method: First, two sheets of metallic nonwoven fabric having the same size of 100 X 30 mm were prepared. Second, the two sheets were overlapped longitudinally by 30 mm. Third, a sheet of nickel solder having a thickness of 50 µm and a size of 30-mm square was sandwiched between the two sheets at the overlapped portion. Fourth, brazing was carried out in vacuum at 1,020 °C. Finally, a tensile test was conducted at a cross head speed of 5 mm/min. If the fracture started at the brazed portion, the metallic nonwoven fabric was judged to be unsatisfactory. The bending performance was tested by subjecting a metallic nonwoven fabric to a 90-degree bending along a round bar having a diameter of 1.0 mm. When the observation with a microscope at 50 power showed no severance and crack in the fibers of the metallic nonwoven fabric, the fabric was judged to be satisfactory in bending performance.

The above tests were carried out on metallic nonwoven fabrics made of iron and composed of fine metal fibers with a fiber diameter of 30 µm or less. Nine types of products having an iron oxide layer and having an oxygen content not less than 0.02 wt. % and not more than 0.8 wt. % showed satisfactory results in brazing quality and bending performance after being kept at a temperature of 25 °C and at a humidity of 50 % for 24 hours. However, the removal of the carbon nonwoven fabric was insufficient in one type of product that was produced at a dew point of water vapor of -30 °C and at a heat treatment temperature of 880 °C, and having no iron oxide layer, was hence unsatisfactory in brazing quality and bending performance.

Next, various products were produced by changing only one manufacturing condition at a time with other manufacturing conditions fixed to evaluate the properties.

### Experimental Examples 1 to 9

### (Effect of Dew Point of Water Vapor)

A carbon nonwoven fabric that consists mainly of PAN-type carbon fibers having an average fiber diameter of 7.0 µm and an organic binder was prepared. The carbon nonwoven fabric was treated to obtain hydrophilicity and other qualities as a pre-treatment for electroplating. Then, the surface of the fibers of the carbon nonwoven fabric was iron-plated with a well-known electroplating method.

Subsequently, heat treatment for removing the carbon nonwoven fabric and for sintering the iron was carried out at a temperature of 950 °C for 30 minutes in an atmospheric gas containing a reducing hydrogen gas, and at a dew point of water vapor shown in Table 1. The products were subjected to analyses and measurements of the metal fiber diameter, the presence or absence of an iron oxide layer, and the oxygen content. The products were then subjected to evaluation tests of brazing quality and bending performance after being kept at a temperature of 25 °C and at a humidity of 50 % for 24 hours.

The results obtained are shown in Table 1.

**Table 1**

| Experimental Example | Metal Fiber Diameter (µm) | Dew point of water vapor (°C) | Presence or absence of iron oxide layer | Oxygen content (wt. %) | Brazing quality | Bending performance (ø 1.0 mm) |
|---|---|---|---|---|---|---|
| 1 | 6.4 | -40 | Presence | 0.12 | ○ | ○ |
| 2 | 6.3 | -10 | Presence | 0.2 | ○ | ○ |
| 3 | 6.5 | 20 | Presence | 0.25 | ○ | ○ |
| 4 | 23.6 | 40 | Presence | 0.45 | ○ | ○ |
| 5 | 23.3 | 50 | Presence | 0.68 | Δ | Δ |
| 6 | 14.4 | -50 | Absence | 0.005 | × | × |
| 7 | 14.1 | -40 | Presence | 0.03 | ○ | ○ |
| 8 | 14.5 | -10 | Presence | 0.08 | ○ | ○ |
| 9 | 14.3 | 60 | Presence | 0.85 | × | × |

| | | | | | | |
|---|---|---|---|---|---|---|
| ○: Satisfactory, Δ: Acceptable, ×: Unsatisfactory | | | | | | |

The results shown in Table 1 are summarized in the following:
(a) Experimental Examples 1 to 4 and 7 and 8, which were heat-treated at not less than -40 °C and not more than 40 °C in the dew point of water vapor of the furnace atmosphere, have an iron oxide layer, an oxygen content not less than 0.02 wt. % and not more than 0.5 wt. %, and are satisfactory in brazing quality and bending performance.
(b) Experimental Example 5, which was heat-treated at 50 °C in the dew point of water vapor, has an oxygen content in excess of 0.5 wt. %. Nevertheless, the brazing quality and bending performance are acceptable.
(c) Experimental Example 6, which was heat-treated at -50 °C (i.e., less than -40 °C) in the dew point of water vapor, has no iron oxide layer and hence is unsatisfactory in both brazing quality and bending performance.
(d) Experimental Example 9, which was heat-treated at 60 °C (i.e., more than 50 °C) in the dew point of water vapor, has an oxygen content of 0.85 wt. % (i.e., more than 0.8 wt. %) and hence is unsatisfactory in both brazing quality and bending performance.

Experimental Examples 1 to 3 have a metal fiber diameter less than 7.0 µm, which is smaller than the average fiber diameter (7.0 µm) of the carbon non woven fabric used as the starting material. This is due to shrinkage of the iron-plated layer by the re-crystallization of the iron grains in the heat treatment process. On the other hand, Experimental Examples 4 to 9 have a metal fiber diameter more than 14.0 µm (i.e., more than 7.0 µm). This is because the prolonged electroplating time combined with other causes increased the amount of the iron that was plated onto the carbon fibers.

### Experimental Examples 10 to 15

### (Effect of Heat Treatment Temperature)

A carbon nonwoven fabric was prepared that consists mainly of pitch-type carbon fibers having an average fiber diameter of 7.0 µm and an organic binder. The carbon nonwoven fabric was treated to obtain hydrophilicity and other qualities as a pre-treatment for electroplating. Then, the surface of the fibers of the carbon nonwoven fabric was iron-plated with a well-known electroplating method.

Subsequently, heat treatment for removing the carbon nonwoven fabric and for sintering the iron was carried out at temperatures shown in Table 2 for 30 minutes in an atmospheric gas containing a reducing hydrogen gas, at a dew point of water vapor of -10 °C. The products were subjected to analyses and measurements of the metal fiber diameter, the presence or absence of an iron oxide layer, and the oxygen content. The products were then subjected to evaluation tests of brazing quality and bending performance after being kept at a temperature of 25 °C and at a humidity of 50 % for 24 hours.

The results obtained are shown in Table 2.

**Table 2**

| Experimental Example | Metal fiber diameter (µm) | Heat treatment temperature (°C) | Presence or absence of iron oxide layer | Oxygen content (wt. %) | Brazing quality | Bending performance (ø 1.0 mm) |
|---|---|---|---|---|---|---|
| 10 | 14.7 | 850 | Absence | 0.011 | × | × |
| 11 | 14.4 | 930 | Presence | 0.07 | ○ | ○ |
| 12 | 14.9 | 1,150 | Presence | 0.14 | ○ | ○ |
| 13 | 14.3 | 1,250 | Presence | 0.38 | ○ | ○ |
| 14 | 14.5 | 1,350 | Presence | 0.59 | Δ | Δ |
| 15 | 14.6 | 1,400 | Presence | 0.82 | × | × |

| | | | | | | |
|---|---|---|---|---|---|---|
| ○: Satisfactory, Δ: Acceptable, ×: Unsatisfactory | | | | | | |

The results shown in Table 2 are summarized in the following:
(a) Experimental Example 10 is insufficient in the removal of the carbon nonwoven fabric, has no iron oxide layer, and hence is unsatisfactory in both brazing quality and bending performance.
(b) Experimental Examples 11 to 13 have an iron oxide layer, have an oxygen content not less than 0.02 wt. % and not more than 0.5 wt. %, and are satisfactory in both brazing quality and bending performance.
(c) Experimental Example 14 has an oxygen content in excess of 0.5 wt. %. Nevertheless, the brazing quality and bending performance are acceptable.
(d) Experimental Example 15 has an oxygen content in excess of 0.8 wt. %. The product has defective, porous fine metal fibers and hence is unsatisfactory in both brazing quality and bending performance.

### Experimental Examples 16 to 20

### (Effect of Hydrogen Concentration)

A carbon nonwoven fabric that consists mainly of PAN-type carbon fibers having an average fiber diameter of 7.0 µm and an organic binder was prepared. The carbon nonwoven fabric was treated to obtain hydrophilicity and other qualities as a pre-treatment for electroplating. Then, the surface of the fibers of the carbon nonwoven fabric was iron-plated with a well-known electroplating method.

Subsequently, a heat treatment for removing the carbon nonwoven fabric and for sintering the iron was carried out at a temperature of 950 °C for 30 minutes in a hydrogen-nitrogen-mixed gas atmosphere having a hydrogen concentration shown in Table 3 at a dew point of water vapor of -10 °C. The products were subjected to evaluation tests of brazing quality and bending performance after being kept at a temperature of 25 °C and at a humidity of 50% for 24 hours.

The results obtained are shown in Table 3.

**Table 3**

| Experimental Example | Metal fiber diameter (µm) | Hydrogen concentration (vol. %) | Presence or absence of iron oxide layer | Oxygen content (wt.%) | Brazing quality | Bending performance (ø 1.0 mm) |
|---|---|---|---|---|---|---|
| 16 | 14.6 | 0.4 | Presence | 0.81 | × | × |
| 17 | 14.4 | 2 | Presence | 0.11 | ○ | ○ |
| 18 | 14.7 | 10 | Presence | 0.08 | ○ | ○ |
| 19 | 14.4 | 50 | Presence | 0.08 | ○ | ○ |
| 20 | 14.4 | 80 | Presence | 0.08 | ○ | ○ |

| | | | | | | |
|---|---|---|---|---|---|---|
| ○: Satisfactory, ×: Unsatisfactory | | | | | | |

The results shown in Table 3 are summarized in the following:
(a) Experimental Examples 17 to 20, which were treated at a hydrogen concentration of 2 vol. % or more in the furnace atmosphere, have an oxygen content not less than 0.02 wt. % and not more than 0.5 wt. % (i.e., the preferable range) and are satisfactory in both brazing quality and bending performance.
(b) Experimental Example 16, which was treated at a hydrogen concentration of 0.4 vol. % (i.e., less than 2 vol. %) in the furnace atmosphere, has an oxygen content in excess of 0.8 wt. % and hence is unsatisfactory in both brazing quality and bending performance.

### Experimental Examples 21 to 25

### (Effect of Carbon Monoxide Concentration)

A carbon nonwoven fabric that consists mainly of pitch-type carbon fibers having an average fiber diameter of 12.5 µm and an organic binder was prepared. The carbon nonwoven fabric was treated to obtain hydrophilicity and other qualities as a pre-treatment for electroplating. Then, the surface of the fibers of the carbon nonwoven fabric was iron-plated with a well-known electroplating method.

Subsequently, heat treatment for removing the carbon nonwoven fabric and for sintering the iron was carried out at a temperature of 950 °C for 30 minutes in a carbon monoxide―nitrogen-mixed gas atmosphere having a carbon monoxide concentration shown in Table 4, at a dew point of water vapor of -10 °C. The products were subjected to evaluation tests of brazing quality and bending performance after being kept at a temperature of 25 °C and at a humidity of 50 % for 24 hours.

The results obtained are shown in Table 4.

**Table 4**

| Experimental Example | Metal fiber diameter (µm) | Carbon monoxide concentration (vol. %) | Presence or absence of iron oxide layer | Oxygen content (wt. %) | Brazing quality | Bending performance (ø 1.0 mm) |
|---|---|---|---|---|---|---|
| 21 | 14.5 | 1 | Presence | 0.86 | × | × |
| 22 | 14.4 | 5 | Presence | 0.34 | ○ | ○ |
| 23 | 14.5 | 20 | Presence | 0.09 | ○ | ○ |
| 24 | 14.4 | 50 | Presence | 0.08 | ○ | ○ |
| 25 | 14.3 | 80 | Presence | 0.08 | ○ | ○ |

| | | | | | | |
|---|---|---|---|---|---|---|
| ○: Satisfactory, ×: Unsatisfactory | | | | | | |

The results shown in Table 4 are summarized in the following:
(a) Experimental Examples 22 to 25, which were treated with a carbon monoxide concentration of 5 vol. % or more in the furnace atmosphere, have an oxygen content not less than 0.02 wt. % and not more than 0.5 wt. % (i.e., the preferable range) and are satisfactory in both brazing quality and bending performance.
(b) Experimental Example 21, which was treated with a carbon monoxide concentration of 1 vol. % (i.e., less than 5 vol. %) in the furnace atmosphere, has an oxygen content in excess of 0.8 wt. % and hence is unsatisfactory in both brazing quality and bending performance.

## Claims

1. A metallic nonwoven fabric made of iron, the metallic nonwoven fabric comprising:
(a) metal fibers having:
(a1) a fiber diameter of 30 µ m or less;
(a2) a hollow cross section; and
(a3) an oxygen content not less than 0.02 wt. % and not more than 0.8 wt. %; and
(b) an iron oxide layer formed at least on the outer surface of the metal fibers.

2. A method for manufacturing a metallic nonwoven fabric, the method comprising the steps of:
(a) preparing a carbon nonwoven fabric comprising carbon fibers;
(b) coating iron on the surface of the fibers of the carbon nonwoven fabric by electroplating; and
(c) removing the carbon nonwoven fabric and sintering the iron in a furnace filled with an atmospheric gas containing a reducing gas, the atmospheric gas being specified by:
(c1) being kept at not less than 930 °C and not more than 1,350 °C; and
(c2) having a dew point of water vapor not less than -40 °C and not more than 50 °C.

3. The method for manufacturing a metallic nonwoven fabric as defined in claim 2, wherein the atmospheric gas contains 2 vol. % or more hydrogen.

4. The method for manufacturing a metallic nonwoven fabric as defined in claim 2, wherein the atmospheric gas contains 5 vol. % or more carbon monoxide.

## Patentansprüche

1. Metallischer Vliesstoff aus Eisen, der folgendes umfaßt:
(a) Metallfasern mit
(a1) einem Faserdurchmesser von 30 µm oder weniger,
(a2) einem hohlen Querschnitt und
(a3) einem Sauerstoffgehalt von nicht weniger als 0,02 Gew.% und nicht mehr als 0,8 Gew.%; und
(b) eine Eisenoxidschicht, die zumindest auf der äußeren Oberfläche der Metallfasern ausgebildet ist.

2. Verfahren zur Herstellung eines metallischen Vliesstoffs, das die folgenden Schritte umfaßt:
(a) Herstellen eines Kohlenstoff-Vliesstoffs, der Kohlefasern umfaßt,
(b) Beschichten der Oberfläche der Fasern des Kohlenstoff-Vliesstoffs mit Eisen mittels Elektroplattierung und
(c) Entfernen des Kohlenstoff-Vliesstoffs und Sintern des Eisens in einem Ofen, der mit einer ein reduzierendes Gas enthaltenden Atmosphäre gefüllt ist, wobei die Atmosphäre **dadurch** spezifiziert ist, daß
(c1) sie auf einer Temperatur von nicht weniger als 930°C und nicht mehr als 1.350°C gehalten wird und
(c2) sie einen Wasserdampf-Taupunkt von nicht weniger als -40°C und nicht mehr als 50°C hat.

3. Verfahren zur Herstellung eines metallischen Vliesstoffs gemäß Anspruch 2, wobei die Atmosphäre 2 Vol.% oder mehr an Wasserstoff enthält.

4. Verfahren zur Herstellung eines metallischen Vliesstoffs gemäß Anspruch 2, wobei die Atmosphäre 5 Vol.% oder mehr Kohlenmonoxid enthält.

## Revendications

1. Etoffe non-tissée métallique faite en fer, l'étoffe non-tissée métallique comprenant :
(a) des fibres métalliques ayant :
(a1) un diamètre de fibre de 30 µm ou moins ;
(a2) une section transversale creuse ; et
(a3) une teneur en oxygène non inférieure à 0,02 % en poids et non supérieure à 0,8 % en poids ; et
(b) une couche d'oxyde de fer formée au moins sur la surface extérieure des fibres métalliques.

2. Procédé pour fabriquer une étoffe non-tissée métallique, le procédé comprenant les étapes de :
(a) préparation d'une étoffe non-tissée de carbone comprenant des fibres de carbone
(b) revêtement de fer sur la surface des fibres de l'étoffe non-tissée en carbone par placage électrolytique ; et
(c) retrait du tissu non-tissé de carbone et frittage du fer dans un four rempli d'un gaz atmosphérique contenant un gaz réducteur, le gaz atmosphérique étant spécifié par :
(c1) un maintien à au moins 930°C et au plus 1350°C ; et
(c2) un point de rosée de la vapeur d'eau non inférieur à -40°C et non supérieur à 50°C.

3. Procédé pour fabriquer une étoffe non-tissée métallique selon la revendication 2, dans lequel le gaz atmosphérique contient 2 % en volume ou plus d'hydrogène.

4. Procédé pour fabriquer une étoffe non-tissée métallique selon la revendication 2, dans lequel le gaz atmosphérique contient 5 % en volume ou plus de monoxyde de carbone.
